(19) Europäisches Patentamt
European Patent Office
Office européen des brevets

(11) **EP 3 496 227 A1**

(12) **EUROPÄISCHE PATENTANMELDUNG**

(43) Veröffentlichungstag:
**12.06.2019 Patentblatt 2019/24**

(51) Int Cl.:
**H02J 3/38** *(2006.01)* **H02J 3/50** *(2006.01)*
**H02J 3/36** *(2006.01)* **F03D 7/04** *(2006.01)*

(21) Anmeldenummer: **18210362.2**

(22) Anmeldetag: **05.12.2018**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **06.12.2017 DE 102017011235**

(71) Anmelder: **Senvion GmbH**
**22297 Hamburg (DE)**

(72) Erfinder: **Letas, Heinz-Hermann**
**24796 Bovenau (DE)**

(74) Vertreter: **Glawe, Delfs, Moll**
**Partnerschaft mbB von**
**Patent- und Rechtsanwälten**
**Postfach 13 03 91**
**20103 Hamburg (DE)**

(54) **WINDPARK MIT AUTARKER PHASENWINKELREGELUNG**

(57) Windpark mit Windenergieanlagen (1), einem parkinternen Netz (3) sowie einer Sammelstation (8), wobei an die Sammelstation eine zentrale Übertragungsleitung (9) angeschlossen ist. Die Windenergieanlagen haben jeweils Steuerungen für Wirk-/Blind-leistung, die abhängig vom Phasenwinkel auf den jeweiligen Umrichter einwirken. Erfindungsgemäß weist der Windpark einen autarken Referenzwinkelgenerator (6) auf, der einen Referenzwinkel ($\phi_{ext}$) für ein Wirk- und Blindachse im Parknetz definierendes artifizielles Koordinatensystem erzeugt. Damit werden die Umrichter der Windenergieanlagen phasenmäßig fremdgesteuert. Die Windenergie-anlage speist nicht mit genau dem Phasenwinkel ($\phi_{lcl}$) ein, wie er an ihren Anschlussklemmen herrscht, sondern mit dem von extern vorgegebenen. Es wird ein zusätzlicher Freiheitsgrad geschaffen. Stimmen die Phasenwinkel nicht überein, entsteht eine Diskrepanz, die zu einer Verdrehung der lokalen Spannungszeiger führt. Dadurch ändert sich die real abgegebene Wirk-/Blindleistungsverteilung, bis sie mit den physikalischen Randbedingungen des Parknetzes zusammenpasst. So kann sich das Parknetz anpassen, insbesondere an eine Sammelstation (8), die keine Blindleistung übertragen kann (Diodengleichrichter einer HGÜ-Strecke 9).

Fig. 1

EP 3 496 227 A1

**Beschreibung**

Die Erfindung betrifft einen Windpark mit autarker Phasenregelung. Er umfasst eine Mehrzahl von Windenergieanlagen zur Erzeugung elektrischer Energie, die über ein parkinternes Netz mit einer Sammelstation verbunden sind. An dieser ist eine zentrale Übertragungsleitung zur Verbindung mit einem Energieübertragungsnetz angeschlossen.

Abgelegene Windparks, insbesondere solche auf hoher See, sind häufig über eine spezielle Übertragungsleitung angeschlossen. Bei derartigen Übertragungsstrecken über größere Entfernungen bestehen häufig Restriktionen in Bezug auf die zu übertragene Blindleistung. Ganz besonders ausgeprägt ist dies bei DC-Links, die prinzipbedingt überhaupt keine Blindleistung übertragen können.

Bei einem DC-Link (hochgespannte Gleichstromübertragung) ist windparkseitig ein Gleichrichter vorgesehen zur Umwandlung des im parkinternen Netz fließenden Drehstroms zu Gleichstrom, um ihn so über eine Gleichstromverbindung zu übertragen. Landseitig ist eine entsprechende Gegenstation angeordnet, welche den übertragenen Gleichstrom wieder in Drehstrom umwandelt und an einem Verknüpfungspunkt (PCC) in das Übertragungsnetz einspeist.

Für den windparkseitig an einer Sammelstation angeordneten Gleichrichter gibt es zwei verschiedene Haupttypen: Der eine Haupttyp weist gesteuerte IGBT als aktive Elemente auf und der andere ungesteuerte Elemente mit Leistungsdioden (zum Beispiel Typ DRU von Siemens).

Letztere Variante ist im Aufbau deutlich einfacher und verlangt nur einen geringen Aufwand. Sie ist insgesamt weniger komplex und bietet hinsichtlich wesentlicher Betriebsparameter, insbesondere Leistung, Robustheit, Kompaktheit etc., große Vorteile. Einen gravierenden Nachteil hat diese Variante jedoch: sie kann keine Blindleistung aus dem parkinternen Netz aufnehmen. Dies hat zur Folge, dass die Windenergieanlagen nicht beliebig Blindleistung erzeugen können, sondern in der Summe exakt nur so viel, um im parkinternen Netz Blindleistungsverluste durch Blindstromverluste durch dessen Leitungen, Transformatoren und andere Betriebsmittel zu kompensieren.

Moderne Windenergieanlagen sind jedoch darauf ausgelegt, eine vorgegebene Blindleistung einzuprägen. Das basiert auf der Prämisse, dass das Netz, an welches die Windenergieanlage angeschlossen ist, Blindleistung übertragen kann. Genau diese Prämisse gilt aber bei der Verwendung in einem abgelegenen Windpark wie dem hier beispielhaft beschriebenen über einen DC-Link angeschlossenen Offshore-Windpark nicht. Blindleistung kann nicht übertragen werden; demgegenüber steht die Eigenschaft der modernen Windenergieanlagen, eine bestimmte Blindleistung einzuprägen. Das passt nicht zusammen. Insoweit ist blindleistungsmäßig gesehen das parkinterne Netz überbestimmt.

Es ist bekannt, dem durch herkömmliche Mittel zu begegnen, beispielsweise das Vorsehen von STATCOMs oder anderen Arten von Phasenschiebern. All dies benötigt zusätzliche Geräte, was aufwendig in der Herstellung ist und zu mehr Komplexität mit entsprechend größerer Fehleranfälligkeit führt.

Der Erfindung liegt die Aufgabe zugrunde, einen Windpark sowie ein entsprechendes Betriebsverfahren anzugeben, womit diese Nachteile vermieden werden.

Die erfindungsgemäße Lösung liegt in den Merkmalen der unabhängigen Ansprüche. Vorteilhafte Weiterbildungen sind Gegenstand der abhängigen Ansprüche.

Bei einem Windpark umfassend eine Mehrzahl von Windenergieanlagen, die jeweils einen über einen Rotor angetriebenen Generator mit Umrichter zur Erzeugung elektrischer Energie aufweisen, und einem parkinternen Netz verbunden sind, welches die Windenergieanlagen mit einer Sammelstation verbindet, wobei an die Sammelstation eine zentrale Übertragungsleitung zur Verbindung mit einem Energieübertragungsnetz angeschlossen ist, wobei ein Phasenwinkel ein Maß ist für eine Phasenverschiebung zwischen Strom und Spannung im parkinternen Netz, und wobei die Windenergieanlagen jeweils Steuerungen für Wirk-/Blindleistung aufweisen, die abhängig vom Phasenwinkel auf den jeweiligen Umrichter einwirken, ist erfindungsgemäß vorgesehen, dass im Windpark ferner ein autarker Referenzwinkelgenerator vorgesehen ist, der einen Referenzwinkel für ein Wirk- und Blindachse im Parknetz definierendes Koordinatensystem erzeugt, und die Umrichter zumindest eines teilnehmenden Teils der Windenergieanlagen phasenmäßig fremdgesteuert sind, indem der vom Referenzwinkelgenerator erzeugte Referenzwinkel über eine Signalleitung an die Wirk-/Blindleistungssteuerung der jeweiligen Windenergieanlage angelegt ist.

Zuerst seien einige verwendete Begriffe erläutert:
Unter einem Referenzwinkelgenerator wird eine Einheit verstanden, die einen Referenzwinkel zu dem Koordinatensystem im parkinternen Netz erzeugt (Referenzphasenwinkel oder kurz Referenzwinkel). Der Referenzwinkelgenerator erzeugt auch eine Referenzfrequenz für das parkinterne Netz.

Unter einem stationären Koordinatensystem wird ein Koordinatensystem verstanden, das nicht umläuft (rotiert). Ein Beispiel hierfür ist das stehende Koordinatensystem eines Drehstromsystems, in dem drei Spannungszeiger umlaufen für die drei Phasen. Die absolute Winkellage des Koordinatensystems braucht nicht zwingend Null betragen, d. h. es kann "verkippt" sein. Diese Winkellage kann variieren (floatender Nullwinkel).

Die Erfindung basiert auf dem Gedanken, die Regelung der Windenergieanlagen mitsamt ihrem jeweiligen Umrichter im Zusammenspiel mit dem parkinternen Netz so zu modifizieren, dass sich die Blindleistungen im Windpark möglichst kompensieren. Durch den Eingriff an der Regelung der Windenergieanlage mit ihrem Umrichter kann dies erreicht werden, ohne dass dazu aufwändige Zusatzhardware, wie Phasenschieber oder STATCOMs, benötigt werden. Die Erfindung hat erkannt, dass dies erreicht werden kann durch die Generierung eines eigenen, an sich vollkommen artifiziellen Koordinatensystems im Windpark. Herkömmlicherweise ist es so, dass eine Windenergieanlage an ihren Anschlussklemmen an das parkinterne Netz die Werte für Spannung und Strom erfasst, daraus die tatsächliche Phasenlage bestimmt und basierend darauf eine Zerlegung in Wirk- und Blindanteil vornimmt. In diesem realen Koordinatensystem (an den Anschlussklemmen gemessen) wird geregelt. Die Regelung prägt dann Wirk- und Blindströme ein. Die Erfindung wendet sich von diesem seit langem üblichen Prinzip ab und schafft nunmehr ein eigenes Windparkautarkes, im Grunde artifizielles Koordinatensystem, das der Regelung der Wirk- und Blindleistungsabgabe der Windenergieanlagen zu Grunde gelegt wird. Die lokale Regelung der Windenergieanlage arbeitet bezüglich der Wirk- und Blindleistung also nicht mit ihrem eigenen lokalen Spannungs-phasensystem, sondern mit einem von extern an die Windenergieanlage angelegten, artifiziellen Spannungs-Referenzsystem; sie ist also in Bezug auf ihre Phase fremdgesteuert.

Dies bringt erhebliche Vorteile mit sich. Verblüffenderweise bringt diese Vorgabe des Phasenwinkels von außen auf die jeweilige Windenergieanlage einen zusätzlichen Freiheitsgrad mit sich. Denn nunmehr speist die Windenergieanlage ihre Leistung nicht mit genau dem Phasenwinkel ein, wie er an ihren Anschlussklemmen herrscht, sondern mit dem von extern vorgegebenen. Es kann - und wird - also eine Differenz auftreten zwischen dem von außen aufgeprägten fremdgesteuerten Phasenwinkel und dem tatsächlich an der Anschlussklemme der jeweiligen Windenergieanlage vorhandenen Ist-Phasenwinkel. Es entsteht insoweit eine gewisse Unabhängigkeit. Das wirkt sich so aus, dass dann wenn die Windenergieanlage wegen des von extern aufgeprägten Phasenwinkels als mit einem an sich nicht passenden Blindstrom einspeist, eine Diskrepanz entsteht, die zu einer Verdrehung der lokalen Spannungszeiger führt, wodurch sich die real abgegebene Wirk-/Blindleistungsverteilung ändert, und zwar so weit bis sie mit den durch das Parknetz vorgegebenen physikalischen Randbedingungen zusammenpasst.

Indem die Erfindung den Phasenwinkel von außen vorgibt, entkoppelt sie die Einstellung am Umrichter von dem tatsächlich herrschenden Phasenwinkel. Dank dieser Entkopplung kann sich die Windenergieanlage besser auf die tatsächlich herrschenden Verhältnisse im Windpark einstellen. Insbesondere wird damit der gefährlichen Überbestimmtheit entgegengewirkt, wie sie in einem Windpark durch die zwingende Vorgabe sonst entsteht, wenn die Sammelstation keine Blindleistung übertragen kann. Eine solche blindleistungsintolerante Sammelstation liegt beispielsweise dann vor, wenn als Gleichrichter einer hochgespannten Gleichstromübertragung ein passiver Diodengleichrichter verwendet ist.

Paradoxerweise ergibt sich somit durch die Fremdeinprägung des Phasenwinkels ein größerer Freiheitsgrad für die Windenergieanlage. Die Überbestimmtheit im parkinternen Netz eines abgelegenen Windparks, insbesondere Offshore-Windparks, kann damit wirkungsvoll vermieden werden. Teure Zusatzausstattung, wie STATCOMs oder Phasenschieber, werden nicht benötigt. Dies ist im Stand der Technik ohne Beispiel.

Überraschenderweise hat sich gezeigt, dass erfindungsgemäß auch mit der externen auf Prägung der Phase die Umrichter geschützt sind gegenüber übergroßen Strömen. Die Erfindung hat erkannt, dass der Scheinstrom trotz der externen Phasenvorgabe konstant gehalten werden kann. Denn grundsätzlich ist es so, dass verschiedene Kombinationen von Wirk- und Blindstrom zum selben Scheinstrom führen können. Insoweit schadet es also nicht, wenn durch die externe Vorgabe ein nicht mit den tatsächlichen Verhältnissen übereinstimmender Wert vorgegeben ist. Eine gefährliche Stromgrenzwertüberschreitung wird erfindungsgemäß so vermieden.

Mit dem von dem Referenzwinkelgenerator erzeugten Phasenwinkel wird mit Vorteil ein synthetisches Koordinatensystem erzeugt. Dieses ist bezüglich seinem Nullwinkel floatend gegenüber dem tatsächlichen Koordinatensystem des parkinternen Netzes an sich. Damit ist gemeint, dass die absolute Phasenlage variieren kann. Damit wird der Tatsache Rechnung getragen, dass sich die absolute Lage des Koordinatensystems verändern kann. Auf diese Weise wird die Möglichkeit geschaffen, dass durch eine geeignete relative Verdrehung zwischen dem synthetischen Koordinatensystem einerseits und der tatsächlichen Phasenlage an der jeweiligen Windenergieanlagenanlage andererseits eine Anpassung erfolgen kann. Im Grunde ermöglicht dies eine optimale Selbst-Justierung.

Zweckmäßigerweise ist ein Phasenwächter vorgesehen, der einen tatsächlichen Phasenwinkel im Parknetz erfasst und dazu ausgebildet ist, eine Differenz zwischen tatsächlichem lokalen Phasenwinkel im Parknetz mit dem Referenzphasenwinkel zu bilden, mit einem Grenzwert zu vergleichen und bei Überschreiten des Grenzwerts den Referenzwinkelgenerator zu verstellen. Damit kann sichergestellt werden, dass die realen Verhältnisse in Bezug auf den Phasenwinkel sich nicht allzu weit entfernen von demjenigen des durch den Referenzphasenwinkel aufgeprägten synthetischen Koordinatensystems. So wird die Stabilität der Regelung für Wirk- und Blindleistung der jeweiligen Windenergieanlagen und des Gesamtsystems gewahrt. Mit Vorteil ist ein Überwachungsmodul für den Phasenwinkel vorgesehen. Zweckmäßigerweise ist es dazu ausgebildet, bei Abweichungen den Referenzwinkelgenerator zu verstellen. So wird erreicht, dass bei übergroßen Abweichungen das synthetische Koordinatensystem entsprechend nachgezogen wird durch Verstellung des Referenzwinkelgenerators. Die Systemsicherheit und Stabilität bleiben damit gewahrt.

Der Wirk-/Blindleistungsregler der jeweiligen Windenergieanlage ist vorzugsweise mit einer Vorsteuerung versehen. Diese ist so ausgeführt, dass sie auf dem Differenzwinkel zwischen dem Referenzphasenwinkel einerseits und dem tatsächlichen lokalen Phasenwinkel andererseits passiert. Auf diese Weise kann die Vorgabe einer Wirk- und/oder Blindleistung sozusagen umgewertet werden in eine entsprechende Größe in dem von extern eingeprägten synthetischen Koordinatensystem mit dem Referenzphasenwinkel. Damit kann die Vorsteuerung besser angepasst werden. Sie wird somit robuster gegenüber eventuellen Abweichungen zwischen eingeprägtem Referenzphasenwinkel einerseits und tatsächlichem Phasenwinkel andererseits.

Vorzugsweise ist die Vorsteuerung dazu ausgebildet, einen tatsächlich abgegebenen Wirkstrom zu erfassen und eine Koordinatentransformation in das synthetische Koordinatensystem durchzuführen, wobei vorzugsweise eine Adaption von Leistungsvorgaben vorgesehen ist, insbesondere mittels einer Verstärkung um einen Cosinus-Wert des Referenzphasenwinkels. Dem liegt die Erkenntnis zugrunde, dass eine Art Verstärkung entsteht zwischen dem sich unter Berücksichtigung des Referenzphasenwinkels ergebenden fiktiven Wirkstrom einerseits und dem sich unter Berücksichtigung des tatsächlichen Phasenwinkels ergebenden realen Wirkstrom andererseits. Diese Verstärkung kann amplitudenmäßig durch eine entsprechende Vorsteuerung kompensiert werden, welche die Amplitude um einen Faktor korrigiert, der dem Kosinus des Winkelunterschieds zwischen Referenzphasenwinkel und tatsächlichem Phasenwinkel entspricht. Damit kann durch die Vorsteuerung eine schnellere und genaue Regelung erreicht werden. Dies verbessert das Führungsverhalten sowie die Systemstabilität.

Entsprechend ist zweckmäßigerweise die Vorsteuerung ferner dazu ausgebildet, einen tatsächlich abgegebenen Blindstrom zu erfassen und eine Koordinatentransformation in das synthetische Koordinatensystem durchzuführen, wobei vorzugsweise eine Adaption von Leistungsvorgaben vorgesehen ist, insbesondere mittels einer Verstärkung um einen Sinus-Wert des Referenzphasenwinkels. Es gilt das vorstehend zum Wirkstrom ausgeführte sinngemäß.

Es ist nicht zwingend erforderlich, dass alle Windenergieanlagen des Windparks mit dem erfindungsgemäßen Referenzphasenwinkel beaufschlagt werden. Es kann genügen, wenn nur ein Teil der Windenergieanlagen daran teilnimmt; mindestens eine muss teilnehmen. Die teilnehmenden Windenergieanlagen brauchen nicht zwingend alle denselben Referenzphasenwinkel zu erhalten. Es kann ferner genügen, wenn die teilnehmenden Windenergieanlagen unterschiedliche Referenzphasenwinkel aufweisen, vorzugsweise durch Berücksichtigung eines lokalen Offsets für den Referenzphasenwinkel. Damit kann eine Anpassung an die jeweiligen individuellen Verhältnisse der einzelnen Windenergieanlagen erfolgen. Das ist insbesondere von Vorteil, wenn gewisse Windenergieanlagen weit entfernt angeordnet sind oder sich sonst bezüglich ihrer elektrischen Parameter am parkinternen Netz unterscheiden. Ferner kann vorgesehen sein, dass der lokale Offset abhängig vom Betriebspunkt der jeweiligen Windenergieanlage ist. Dies bietet weitere Möglichkeiten zur Anpassung und zur Verteilung von Lasten, insbesondere der Blindleistungserbringung, zwischen den Windenergieanlagen des Windparks.

Verschiedene Vorgaben des Referenzphasenwinkels können anlagenindividuell für die einzelnen Windenergieanlagen erfolgen. Es kann aber auch vorgesehen sein, dass die teilnehmenden Windenergieanlagen in Gruppen unterteilt sind, wobei die Gruppen unterschiedliche Referenzphasenwinkel aufweisen. Die Aufteilung in Gruppen ermöglicht in der Regel eine gute Regelbarkeit bei geringem Aufwand.

Zweckmäßig ist es insbesondere, wenn mindestens eine andere der Windenergieanlagen des Windparks mit einem tatsächlichen Phasenwinkel als Referenzphasenwinkel betrieben ist, wobei vorzugsweise an diese Windenergieanlage der tatsächliche Phasenwinkel an der Sammelstation angelegt ist. Damit ist sichergestellt, dass mindestens eine Windenergieanlage mit den realen Parametern in Bezug auf Phasenlage des Windparks betrieben wird. Diese Windenergieanlage fungiert auch sozusagen als Slack-Knoten in Bezug auf die Phase. Das ist günstig für die Systemstabilität. Das gilt insbesondere dann, wenn diese Windenergieanlage an oder in der Nähe der Sammelstation angeordnet ist und somit denselben Phasenwinkel wie diese aufweist. Sofern noch Phasenwinkel-Abweichungen bestehen sollten, können sie durch diese Windenergieanlage erkannt und kompensiert werden. Es erfolgt somit noch eine Feinabstimmung, so dass im Ergebnis an der Sammelstation ein Phasenwinkel von Null und damit Blindleistungsfreiheit vorherrscht. Es versteht sich, dass mindestens eine weitere Windenergieanlage des Windparks mit dem erfindungsgemäßen artifiziellen Spannungsreferenzsystem betrieben ist.

Mit Vorteil ist ferner ein Überblendmodul vorgesehen, das einen Eingang für einen lokalen tatsächlichen Phasenwinkel und einen Eingang für den Referenzwinkel aufweist und dazu ausgebildet ist, von dem einen auf den anderen Eingang allmählich überzublenden. Somit kann stufenlos zwischen dem artifiziellen, fiktiven Referenzphasenwinkel des synthetischen Koordinatensystems einerseits und dem realen lokalen Phasenwinkel andererseits verstellt werden. Dies bietet insbesondere große Vorteile bei der Anschaltung von Windenergieanlagen. Sie können so zumindest anfänglich mit dem tatsächlich vorhandenen Phasenwinkel betrieben werden, und dann später im stabilen Betrieb kontinuierlich umgeschaltet werden auf die erfindungsgemäße externe Vorgabe des Phasenwinkels.

Gemäß einem weiteren vorteilhaften Aspekt der Erfindung erfolgt entsprechend eine besondere Vorgabe der Blindleistung an die einzelnen Windenergieanlagen. In der einfachsten Ausführungsform arbeiten alle Windenergieanlagen mit demselben Vorgabewert. Unbedingt erforderlich ist dies aber nicht. Es kann auch vorgesehen sein, dass die Windenergieanlagen den Vorgabewert bezüglich des Blindstroms lastabhängig anpassen. Auf diese Weise können mit hoher Last betriebene Windenergieanlagen eine geringere Blindleistung zusteuern, während solche Windenergieanlagen mit geringer Leistung ihre noch ausreichenden Reserven nutzen können, um eine höhere Blindleistung beizusteuern.

Es kann auch vorgesehen sein, dass die Anpassung in Abhängigkeit der Spannung im Parknetz erfolgen kann. Eine besonders zweckmäßige Art der Anpassung, die gegebenenfalls unabhängigen Schutz verdient, ist, dass einander benachbarte Windenergieanlagen gegenläufig variierte Vorgabewerte erhalten. So kann beispielsweise eine der benachbarten Anlagen einen um einen gewissen Betrag erhöhten Sollwert für die Blindleistungseinspeisung erhalten, während die benachbarte Anlage einen betragsmäßig entsprechend erniedrigten Sollwert für die Blindleistungseinspeisung erhält. Damit zirkuliert zwischen diesen beiden Windenergieanlagen eine Blindleistung, wodurch bei geeigneter Wahl der gegenläufigen Vorgabewerte eine Kompensation von Impedanzen zwischen diesen Windenergieanlagen erreicht werden kann. Diese Fähigkeit zur lokalen Kompensation der Impedanzen direkt am Ort der Entstehung ist ein besonderer Verdienst der Erfindung.

Die Erfindung erstreckt sich ferner auf ein entsprechendes Verfahren zum Betreiben eines Windparks.

Nachfolgend wird die Erfindung anhand einer bevorzugten Ausführungsform beispielhaft erläutert. Es zeigen:

Fig. 1 eine schematische Ansicht eines Windparks gemäß einem Ausführungsbeispiel der Erfindung;

Fig. 2 Ersatzschaltbilder für ein parkinternes Netz;

Fig. 3 ein Blockdiagramm zur vektorbasierten Regelung einer Windenergieanlage;

Fig. 4 ein Funktionsbild zu mehreren Windenergieanlagen in dem Windpark gemäß Fig. 1;

Fig. 5 ein Blockdiagramm zu einer Vorsteuerung;

Fig. 6 Darstellungen zu Strömen in Koordinatensystemen;

Fig. 7 ein Blockdiagramm zu einem Überblendmodul; und

Fig. 8 eine Funktionsansicht zu dem Referenzwinkel gemäß Überblendmodul.

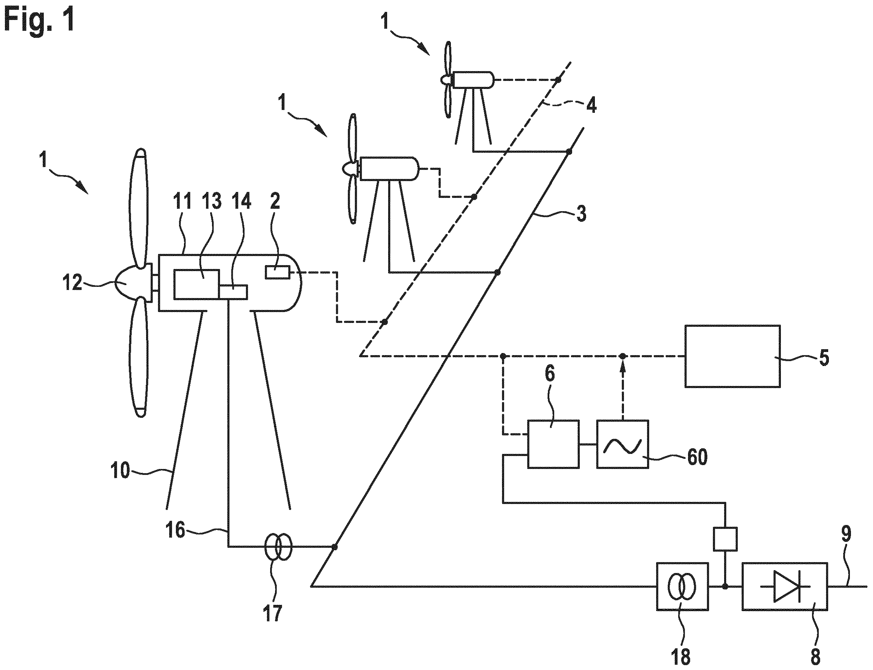

Ein Windpark gemäß einem Ausführungsbeispiel der Erfindung ist in Figur 1 dargestellt. Der Windpark umfasst eine Mehrzahl von Windenergieanlagen 1 zur Erzeugung elektrischer Leistung, ein parkinternes Netz 3, an welche die Windenergieanlagen 1 die erzeugte elektrische Leistung abgeben, einen Parktransformator 18, an den ein parkinternes Netz 3 angeschlossen ist, und eine Sammelstation 8, welche die von den Windenergieanlagen 1 des Windparks erzeugte und über das parkinterne Netz 3 gesammelte elektrische Leistung an eine Übertragungsleitung 9 abgibt. Das parkinterne Netz ist als ein Drehstromnetz und die Übertragungsleitung ist vorzugsweise als Hochspannungsgleichstromübertragung (HGÜ) und passivem Diodengleichrichter ausgeführt. Zur Überwachung und übergeordneten Steuerung der Windenergieanlagen 1 ist ein Parkmaster 5 vorgesehen. Dieser ist über ein Kommunikationsnetz 4 mit den einzelnen Windenergieanlagen 1 verbunden. Die in Figur 1 dargestellten drei Windenergieanlagen 1 sind lediglich exemplarisch zu sehen; der Windpark kann deutlich mehr Windenergieanlagen aufweisen. Mindestens weist er jedoch zwei, vorzugsweise mindestens drei Windenergieanlagen 1 auf.

Die Windenergieanlage 1 ist im Wesentlichen konventionell ausgeführt. Sie umfasst einen Turm 10 mit einer an dessen oberen Ende in Azimutrichtung schwenkbar angeordneten Gondel 11. An einer Stirnseite der Gondel 11 ist ein Windrotor 12 drehbar befestigt, der über eine (nicht dargestellte) Rotorwelle einen Generator 13 zur Erzeugung elektrischer Leistung antreibt. Der Generator 13 ist mit einem Umrichter 14 kombiniert, diese geben die erzeugte elektrische Leistung über eine Anschlussleitung 16 und einen optionalen Anlagentransformator 17 an das parkinterne Netz 3 ab. Der Umrichter 14 kann als Vollumrichter oder als Teilumrichter (mit einer doppelt gespeisten Asynchronmaschine als Generator) ausgeführt sein. In der Gondel 11 ist ferner eine Betriebssteuerung 2 der Windenergieanlage 1 angeordnet. Sie ist dazu ausgebildet, den Betrieb der Windenergieanlage und ihrer Komponenten, insbesondere des Umrichters 14 zu überwachen und zu steuern. Die Steuerung 2 der jeweiligen Windenergieanlage 1 ist mit dem Kommunikationsnetz 4 zur Kommunikation mit dem Parkmaster 5 verbunden.

Ferner im Windpark vorgesehen ist ein eigener, autark agierender Referenzwinkelgenerator 6. Dieser umfasst einen Frequenzgenerator 60, der ein Referenzspannungssystem und insbesondere einen Referenzwinkel für ein Wirk- und Blindachse der Windenergieanlagen 1 im Parknetz 3 definierendes Koordinatensystem erzeugt. Der Frequenzgenerator 60 schafft also ein eigenes, quasi synthetisches Koordinatensystem und prägt es den Windenergieanlagen 1 auf, die es als Basis (gegebenenfalls mit Modifizierungen) für die Abgabe der von ihnen erzeugten elektrischen Leistung mittels des Umrichters 14 verwenden. Ein solches selbst definiertes, synthetisches Koordinatensystem eignet sich insbesondere für solche Windparks, die an abgelegenen Orten und/oder über eine phasenblinde Verbindungsleitung (wie eine Gleichstromübertragung, zum Beispiel HGÜ mit passivem Diodengleichrichter) an das elektrische Verbundnetz angeschlossen sind. Das gilt insbesondere zur Anwendung bei Offshore-Windparks.

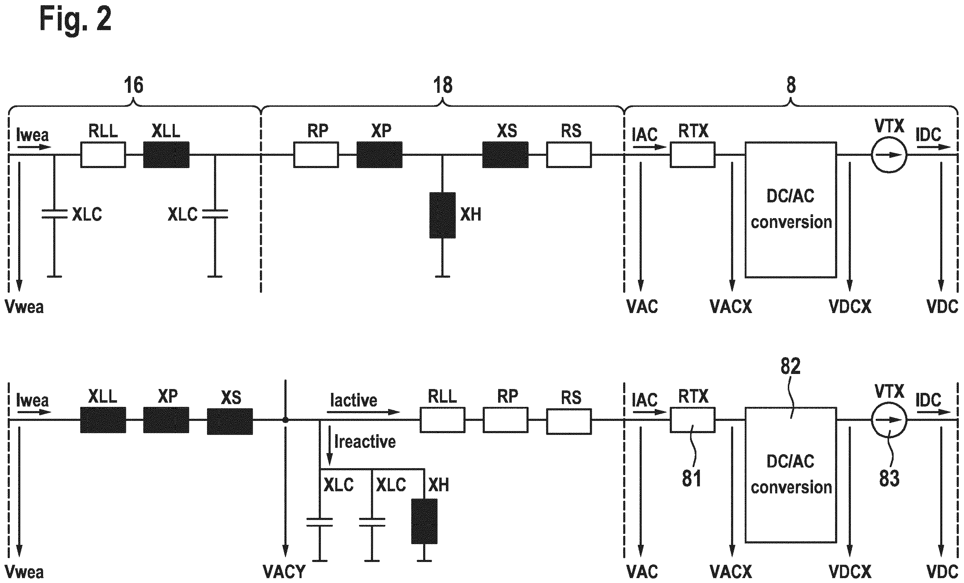

Es wird nun Bezug genommen auf die Figur 2A, B, in der alternative Ersatzschaltbilder für das parkinterne Netz 3 mit daran angeschlossenen Komponenten dargestellt sind. In Figur 2A ist ein konventionelles Ersatzschaltbild dargestellt, worin zur Vereinfachung der Impedanzen der Übertragungsleitungen 16 sowie der Leitungen des parkinternes Netzes 3 an sich, die Impedanz des Parktransformators 18 und die der Sammelstation 8 zusammengefasst sind. Die Sammelstation 8 ist dargestellt als ein mit Leistungsdioden aufgebauter Gleichrichter, wobei die Leistungsdioden summarisch dargestellt sind durch einen Ersatzwiderstand 81, eine ideale Diode 82 und eine Gleichspannungsquelle 83 als Repräsentant für die Durchlassspannung.

Mit den Bezeichnungen R bzw. X und nachfolgenden Indices sind die ohmschen induktiven Impedanzen bezeichnet, wobei der Index LL für die Leitungen an sich, der Index LC für deren kapazitiver Kopplung, der Index P für die Primärseite des Parktransformators 18, der Index S für dessen Sekundärseite und der Index H für dessen Hauptfeldinduktivität stehen, und der Index TX für die jeweiligen Werte an der Sammelstation 8. Die am Ausgang der Windenergieanlage 1 herrschende Spannung wird als Vwea und der fließende Strom als Iwea bezeichnet. Die schließlich am Eingang der Sammelstation anliegende Spannung im Drehstromnetz ist als VAC und der dort fließende Strom als IAC bezeichnet. Die an der (idealen) Diode 82 anliegende Wechselspannung wird als VACX bezeichnet und die sich daraus nach idealer Gleichrichtung ergebende Gleichspannung als VDCX, woraus unter Berücksichtigung der Durchlassspannung mittels Element 83 ein Gleichspannungswert von VDC und ein Gleichstrom von IDC resultieren.

Zur einfachen Darstellung ist es zweckmäßig, gleichartige Elemente beieinander zu gruppieren, woraus sich dann das Ersatzschaltbild in Figur 2B ergibt. Als neuer Wert kommt hier die Spannung VACY hinzu, welche die Spannung an dem Kopplungspunkt zwischen induktiven, kapazitiven und ohmschen Impedanzen beschreibt. Im Übrigen entsprechen die Elemente den in Figur 2A dargestellten.

Aus der vereinfachten Darstellung lässt sich ersehen, dass es die Differenzspannung VACY minus VACX ist, welche den Strom IAC treibt und damit ist sie es, die den Wirkleistungsfluss definiert. Für die Wirkströme gilt folgendes: berücksichtigt man, dass die Widerstände in der ohmschen Gruppe verhältnismäßig klein sind, so bedeutet dies, dass bereits ein verhältnismäßig kleiner Anstieg von VACY hohe Wirkströme hervorrufen kann. Die Spannung VACX hängt von den Gleichspannungen VDCX und VDC der HGÜ-Verbindung 9 ab. Für die Blindströme gilt wiederum: sie ergeben sich direkt aus der Spannung VACY geteilt durch die Impedanz der zur Masse verbundenen Impedanzen. Dieser Strom ist verhältnismäßig klein und ergibt sich grob gesagt im Wesentlichen passiv aus dem Wirkleistungsbetriebspunkt der Windenergieanlage und der Spannung VACY. Ferner sind die Spannungen VACY und Vwea phasenverschoben wegen des Spannungsabfalls über die induktiven Serienimpedanzen XLL, XP und XS aufgrund des Windenergieanlagenstroms Iwea.

Die Erfindung macht sich dies zunutze, indem sie den Wirkstrom einprägt durch Steuerung der Spannung VACY, oder genauer gesagt der Spannungsdifferenz zwischen VACY und VACX, wobei zu berücksichtigen ist, dass die Spannung VACY keine real messbare Spannung ist. Eine Einprägung des Blindstroms erfolgt nicht.

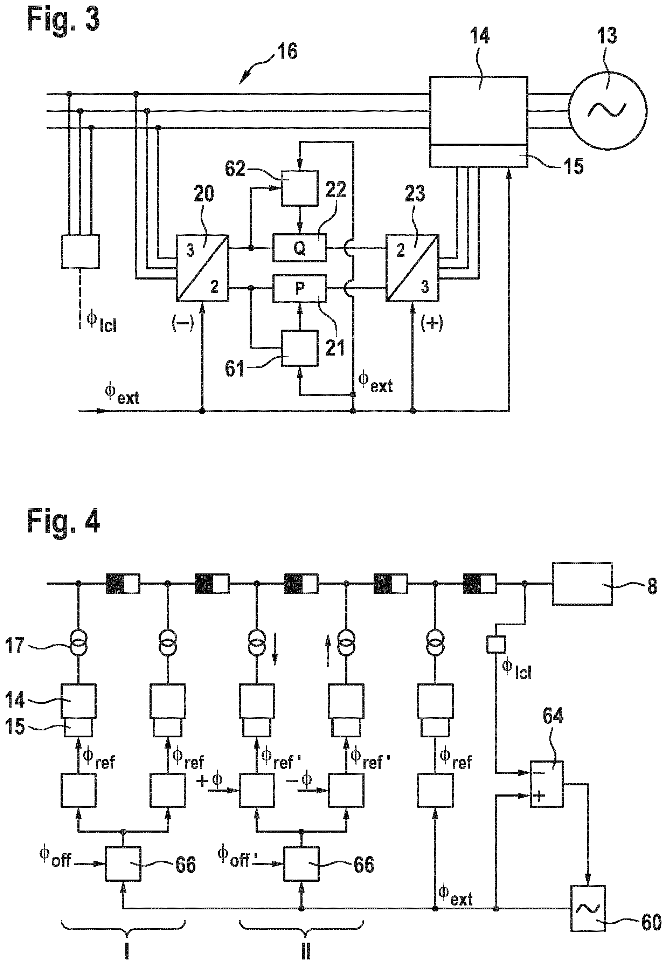

Ein wesentliches Element hierbei ist, dass erfindungsgemäß die Windenergieanlage die von ihr erzeugte elektrische Leistung nicht mit der gemessenen Phasenlage an der eigenen Anschlussleitung 16 in das parkinterne Netz 3 einspeist, sondern stattdessen einen von extern vorgegebenen Phasenwinkel zugrunde legt. Dieser von extern vorgegebene Phasenwinkel wird in der vektorbasierten Regelung der Windenergieanlage 1 verwendet und ist in Figur 3 visualisiert.

Es wird nun Bezug genommen auf die Figur 3. Im Grunde konventionell ist der Generator 13, welcher an einen Umrichter 14 angeschlossen ist, und dieser wiederum nach Umformung die elektrische Leistung über die Leitung 16 abgibt. Mittels geeigneter Sensoren an den drei Leitungen des Drehstromsystems werden Spannungen und Ströme erfasst und zu einem Block 20 zur Koordinatentransformation angelegt. Dieser Block 20 ist dazu ausgebildet, die im Dreiphasensystem des Drehstromnetzes erfassten Werte für Spannungen und Ströme in ein zweiachsiges am Rotationsvektor orientierten Koordinatensystem (sogenannte D, Q Koordinaten) umzurechnen und dabei winkelmäßig zurückzudrehen (-), um sie so zur Regelung der Wirkleistung (mittels Regler 21) und der Blindleistung (mittels Regler 22) heranzuziehen. Die Regelung der Wirk-/Blindleistung erfolgt also in dem D, Q-Koordinatensystem. Zum Schluss ist es erforderlich, wieder eine Rücktransformation des Koordinatensystems vorzusehen. Dazu ist der Block 23 vorgesehen, welcher das zweiachsige Koordinatensystem wieder umwandelt in das dreiphasige Drehstromsystem und dabei entsprechend winkelmäßig vordreht (+), und auf dieser Basis die Steuersignale an eine Steuerung 15 des Umrichters 14 anlegt. Für die Koordinatenwandlung stehend/rotierend bzw. rotierend/stehend benötigen sowohl der Block 20 wie auch der Block 23 eine Information über den Phasenwinkel. Dieser wird herkömmlicherweise aus der tatsächlich an der Anschlussleitung 16 anliegenden Phase bestimmt, gemessen als $\phi_{lcl}$. Dieser Wert ist anschauungshalber in Figur 3 mit gestrichelter Linie dargestellt. Er wird aber erfindungsgemäß für die Koordinatentransformation 20, 23 nicht verwendet. Stattdessen verwendet wird ein von extern vorgegebener (Referenzwinkelgenerator 6) Phasenwinkel $\phi_{ext}$. Das bedeutet, die phasenmäßige Aufteilung der Ströme nach Wirk- und Blindanteil erfolgt somit nicht anhand der tatsächlichen Phasenlage $\phi_{lcl}$ an der Anschlussleitung 16 der Windenergieanlage 1, sondern anhand eines - im Grunde fiktiven - extern vorgegebenen Phasenwinkels $\phi_{ext}$.

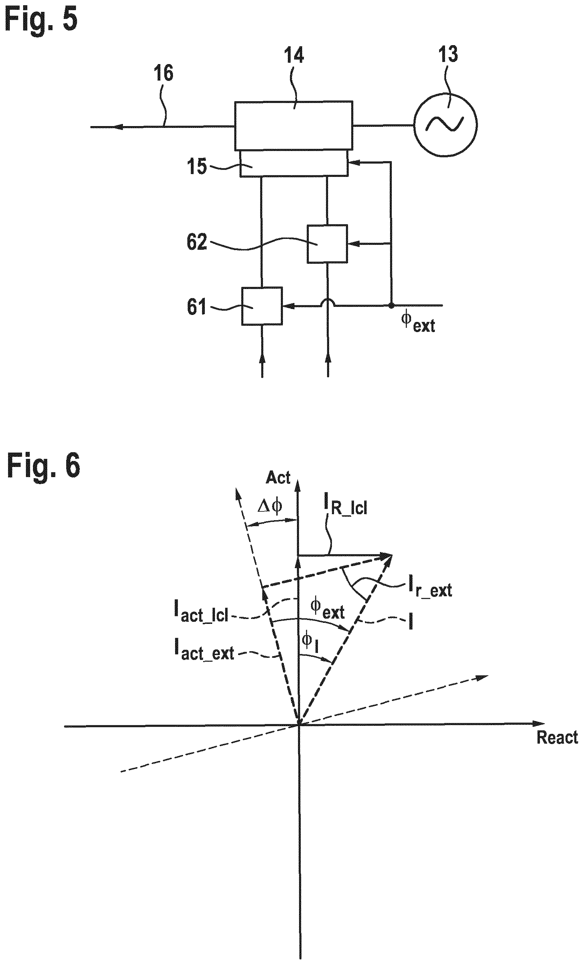

Diese Koordinatentransformation und die zugrunde liegenden Koordinatensysteme sind in Figur 6 veranschaulicht. Mit durchgezogenen Linien dargestellt ist das Koordinatensystem, welches die tatsächlich an der Anschlussleitung 16 herrschenden Verhältnisse darstellt. Auf der Abszisse sind der Blindanteil ("react") und auf der Koordinate ist der Wirkanteil ("act") dargestellt. Mit gestrichelter Linie ist das von dem Referenzwinkelgenerator 6 synthetisch erzeugte externe Koordinatensystem dargestellt. Es unterscheidet sich von dem realen Koordinatensystem dadurch, dass es eine im Grunde an sich beliebige Phasenlage zu dem realen Koordinatensystem aufweist (wobei aus Zweckmäßigkeitsgründen die Abweichung nicht zu groß sein sollte). Ein von dem Umrichter 14 tatsächlich über die Anschlussleitung 16 abgegebener Scheinstrom ist mit I bezeichnet. Der Strom ist real und existiert unabhängig davon, welches Koordinatensystem verwendet wird für eine Zerlegung in Wirk- bzw. Blindanteil. In dem realen Koordinatensystem (mit durchgezogenen Achsen) kann dieser Gesamtstrom I zerlegt werden in einen tatsächlichen Wirkstrom-anteil $I_{act\_lcl}$ und einen tatsächlichen Blindanteil $I_{R\_LCl}$ (dargestellt mit durchgezogenen Pfeillinien). Derselbe Scheinstrom I setzt sich in dem synthetisch erzeugten fiktiven Koordinatensystem aus einem fiktiven Wirkstromanteil $I_{act\_ext}$ und einem fiktiven Blindstromanteil $I_{R\_ext}$ zusammen (dargestellt durch fett gestrichelte Pfeillinien).

Wie man sieht, unterscheiden sich die Beträge des Wirkanteils und des Blindanteils signifikant zwischen der Darstellung im realen und fiktiven Koordinatensystem. Die Beträge für den Wirk- und Blindstrom ergeben sich in dem fiktiven Koordinatensystem gemäß den folgenden Beziehungen:

$$I_{act\_ext} = |I| * \cos \phi_{lcl} = |I| * \cos (\phi_{ext} - \Delta\phi) \qquad (1)$$

$$I_{R\_ext} = |I| * \sin \phi_{lcl} = |I| * \sin (\phi_{ext} - \Delta\phi) \qquad (2)$$

Hierbei ist $\Delta\phi$ die Differenz zwischen $\phi_{ext} - \phi_{lcl}$. Man kann also sagen, dass bezogen auf die beiden Koordinatensysteme sich Wirkstrom und Blindstrom unterschiedlich aufteilen, wobei der Scheinstrom in beiden Fällen gleich ist.

Das bedeutet aber auch, dass bei einem angenommenen Phasenunterschied von $\Delta\phi$ der Wirkstrom in dem fiktiven Koordinatensystem sich betragsmäßig stets von dem realen Wirkstrom unterscheidet gemäß obiger Beziehung; für den Blindstrom gilt entsprechendes. Indem die Steuerung 2 der Windenergieanlage 1 erfindungsgemäß mit dem externen, synthetisch erzeugten fiktiven Phasenwinkel beaufschlagt wird, arbeiten auch die Wirkleistungsregler 21 und die Blindleistungsregler 22 in dem fiktiven Koordinatensystem. Sie regeln damit auf einen anderen Betrag der Wirkleistung (bzw. der Blindleistung), als es den tatsächlichen Verhältnissen entspricht. Die daraus resultierende Abweichung kann zu Problemen beim Führungsverhalten sowie bei der Systemstabilität führen. Um dies zu vermeiden, sieht die Erfindung vorzugsweise eine Vorsteuerung vor (s. auch Fig. 5). So ist zum einen für den Wirkleistungsregler 21 eine Wirkleistungsvorsteuerung 61 vorgesehen. Darin ist der Zusammenhang implementiert, wonach sich der Wirkstrom in dem fiktiven Koordinatensystem gemäß der oben angegebenen Beziehung (1) von den realen Verhältnissen unterscheidet. Dies wird durch die Vorsteuerung 61 berücksichtigt. Sie verhindert, dass die realen und fiktiven Verhältnisse in Bezug auf den Wirkstrom zu sehr auseinanderlaufen. Für den Blindstrom gilt entsprechendes: hierbei ist für den Blindleistungsregler 22 eine entsprechende Vorsteuerung 62 für den Blindstrom vorgesehen.

Es wird nun zusätzlich Bezug genommen auf die Figur 4. Damit die durch die Vorsteuerung 61, 62 zu überbrückende Diskrepanz nicht zu groß wird, darf der Winkelunterschied $\Delta\phi$ zwischen dem tatsächlichen und dem fiktiven Koordinatensystem nicht zu groß werden. Zu diesem Zweck ist vorzugsweise ein Phasenwächter 64 vorgesehen. Er weist zwei Eingänge auf, wobei an den einen Eingang der tatsächliche Phasenwinkel $\phi_{lcl}$ und an den anderen Eingang der von den Referenzwinkelgenerator 6 erzeugte externe Phasenwinkel $\phi_{ext}$ angelegt ist. Der Phasenwächter 64 bildet die Differenz dazwischen und vergleicht sie mit einem einstellbaren Grenzwert. Nur wenn dieser überschritten wird, gibt der Phasenwächter 64 ein Stellsignal an den Referenzwinkelgenerator 6 aus, damit sich dessen Phasenlage so verändert, dass die Differenz so weit verringert wird, dass sie unterhalb des einstellbaren Grenzwerts liegt. Auf diese Weise wird ein zu weites Auseinanderlaufen der beiden Koordinatensysteme vermieden, was ansonsten zu einem Wegkippen und damit bedingt zu Stabilitätsproblemen führen könnte.

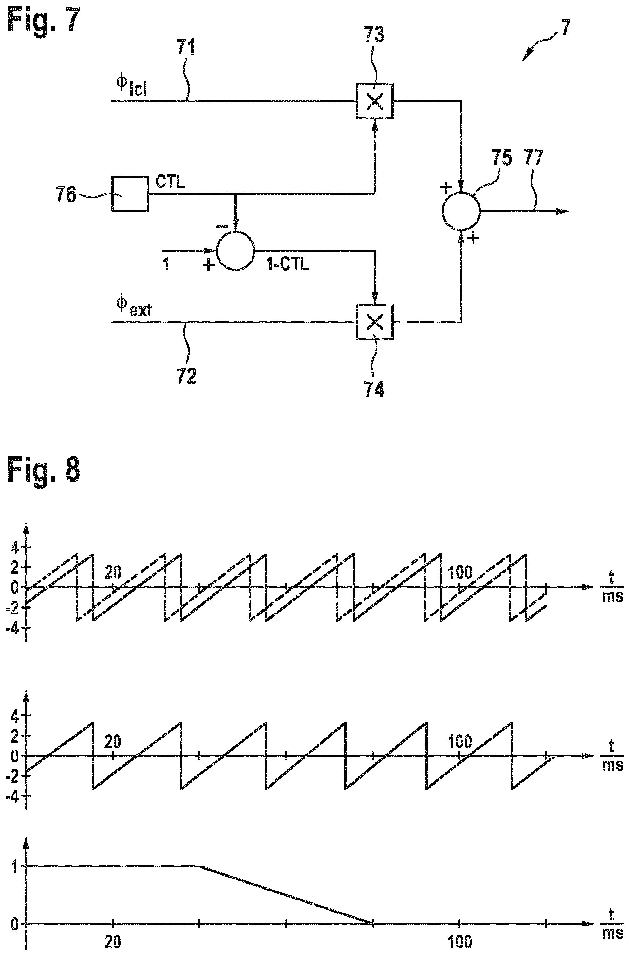

Wie in Fig. 7 dargestellt ist, kann optional vorgesehen sein, dass die Windenergieanlage 1 in gewissen Situationen nicht mit dem von extern vorgegebenen Referenzwinkel $\phi_{ext}$ arbeitet, sondern mit dem lokalen. Dies kann insbesondere bei dem Start der Windenergieanlage (Anfahren) von Vorteil sein. Hierbei ist es zweckmäßig, wenn die Windenergieanlage 1 mit dem Phasenwinkel gemäß den tatsächlich herrschenden Verhältnissen $\phi_{lcl}$ betrieben wird. Um nach dem Anfahrvorgang die Windenergieanlage 1 schonend auf den externen Referenzwinkel $\phi_{ext}$ umzuschalten, ist vorzugsweise ein Überblendmodul 7 vorgesehen. Dieses weist einen Eingang 71 für den tatsächlichen Phasenwinkel $\phi_{lcl}$ und einen Eingang 72 für den externen Phasenwinkel $\phi_{ext}$ auf. Sie sind angelegt an ein Multiplikationsglied 73 bzw. 74. Ferner ist ein Steuersignal CTL angelegt, welches rampenartig von 0 bis 1 läuft für ein Mischungsverhältnis von 0-100 %. Dieser Wert wird jeweils gegenläufig als Multiplikator an die beiden Multiplikationsglieder 73, 74 angelegt. Deren Ausgänge sind an ein Summationsglied 75 angeschlossen, welches schließlich das gemischte Ausgangssignal 77 erzeugt. Auf diese Weise kann ein stufenloser Übergang zwischen dem lokalen Phasenwinkel $\phi_{lcl}$ und dem fiktiven Referenzwinkel $\phi_{ext}$ erreicht werden. Das Steuersignals CTL wird von einem Startmodul 76 generiert.

Die Wirkungsweise des Überblendmoduls 7 mit dem Startmodul 76 ist in Figur 8 dargestellt. In Figur 8A sind mit gestrichelter Linie der fiktive Referenzwinkel $\phi_{ext}$ und mit durchgezogener Linie der tatsächliche Phasenwinkel $\phi_{lcl}$ dargestellt. Das Steuersignal CTL ist in Figur 8C dargestellt. Es steht an seinem Anfang auf 1, das bedeutet es soll zu 100 % der tatsächliche lokale Phasenwinkel $\phi_{lcl}$ verwendet werden. Der Wert des Steuersignals CTL sinkt nachfolgend linear rampenartig auf einen Wert von 0, was bedeutet, dass graduell umgeschaltet wird auf den externen Referenzwinkel $\phi_{ext}$. Das sich dabei ergebende Ausgangssignal ist in Figur 8B dargestellt. Man erkennt, dass ein sprungfreier harmonischer Übergang in Bezug auf die Phasenlage erfolgt.

Die Windenergieanlagen 1 des Windparks können alle mit demselben externen Referenzwinkel betrieben sein. Unbedingt nötig ist dies aber nicht. Es kann auch vorgesehen sein, die Windenergieanlagen 1 zu Gruppen I, II zusammenzufassen, die mit verschiedenen externen Referenzwinkeln betrieben werden (s. Figur 4). Dazu ist zweckmäßigerweise in solchen Gruppen ein Offsetmodul 66 vorgesehen. Dies ist dazu ausgebildet, den von extern vorgegebenen Referenzwinkel $\phi_{ext}$ um einen Offsetwinkel $\phi_{Off}$ zu verändern. Ferner können sich zwischen den Gruppen I, II die Offsetwinkel unterscheiden, so dass eine Gruppe II mit einem anderen Offsetwinkel $\phi_{Off}'$ betrieben ist.

Der Offsetwinkel $\phi_{Off}$ braucht nicht statisch zu sein, sondern kann von dem Offsetmodul 66 variiert sein, beispielsweise in Abhängigkeit von einer Spannung oder einem Betriebspunkt der jeweiligen Windenergieanlage. Eine Anpassung kann auch in der Weise vorgesehen sein, dass Blindstrom zwischen vorzugsweise benachbarten Windenergieanlagen 1 zirkuliert. Dadurch können Spannungsabfälle im Parknetz durch die dazwischenliegenden Leitungsimpedanzen reduziert bzw. kompensiert werden. Dazu ist zweckmäßigerweise vorgesehen, die Vorgaben für Wirkstrom und insbesondere Blindstrom an den jeweiligen Windenergieanlagen 1 durch Zusatzwerte gegenläufig zu verändern. Auf diese Weise wird ein lokal zirkulierender zusätzlicher Blindstrom erzeugt, wie in Figur 4 durch die beiden in entgegengesetzter Richtung orientierten Pfeile bei den in der Mitte angeordneten Windenergieanlagen dargestellt ist.

## Patentansprüche

1. Windpark umfassend eine Mehrzahl von Windenergieanlagen (1), die jeweils einen über einen Rotor (12) angetriebenen Generator (13) mit Umrichter (14) zur Erzeugung elektrischer Energie aufweisen, und mit einem parkinternen Netz (3) verbunden sind, welches die Windenergieanlagen (1) mit einer Sammelstation (8) verbindet, wobei an die Sammelstation (8) eine zentrale Übertragungsleitung (9) zur Verbindung mit einem Energieübertragungsnetz angeschlossen ist, wobei ein Phasenwinkel ($\phi$) ein Maß ist für eine Phasenverschiebung zwischen Strom und Spannung im parkinternen Netz (3) ist, und wobei die Windenergieanlagen jeweils eine Steuerung (2) für Wirk-/Blindleistung aufweisen, die abhängig vom Phasenwinkel auf den jeweiligen Umrichter (14) einwirken,
**dadurch gekennzeichnet, dass**
im Windpark ferner ein autarker Referenzwinkelgenerator (6) vorgesehen ist, der einen Referenzwinkel ($\phi_{ext}$) für ein Wirk- und Blindachse der Windenergieanlagen (1) im Parknetz (3) definierendes Koordinatensystem erzeugt, und die Umrichter (14) zumindest eines teilnehmenden Teils der Windenergieanlagen phasenmäßig fremdgesteuert sind, indem der vom Referenzwinkelgenerator (6) erzeugte Referenzwinkel ($\phi_{ext}$) über eine Signalleitung (4) an die Wirk-/Blindleistungssteuerung (21, 22) der jeweiligen Windenergieanlage (1) angelegt ist.

2. Windpark nach Anspruch 1, **dadurch gekennzeichnet, dass** mit dem Referenzwinkel ($\phi_{ext}$) des Referenzwinkelgenerators (6) ein synthetisches Koordinatensystem gebildet ist, mit einem gegenüber einem Koordinatensystem des parkinternen Netz (3) floatenden Nullwinkel.

3. Windpark nach Anspruch 1 oder 2, **dadurch gekennzeichnet, dass** ein Phasenwächter (64) vorgesehen ist, der einen tatsächlichen Phasenwinkel ($\phi_{lcl}$) im Parknetz (3) erfasst und dazu ausgebildet ist, eine Differenz zwischen tatsächlichen lokalen Phasenwinkel ($\phi_{lcl}$) im Parknetz (3) mit dem Referenzphasenwinkel ($\phi_{ext}$) zu bilden, mit einem Grenzwert zu vergleichen und bei Überschreiten des Grenzwerts den Referenzwinkelgenerator (6) zu verstellen.

4. Windpark nach einem der vorangehenden Ansprüche, **dadurch gekennzeichnet, dass** der Wirk-/Blindleistungsregler (21, 22) der jeweiligen Windenergieanlage (1) mit einer auf dem Differenzwinkel ($\Delta\phi$) zwischen Referenzphasenwinkel und tatsächlichem lokalen Phasenwinkel basierenden Vorsteuerung (61, 62) versehen ist.

5. Windpark nach Anspruch 4, **dadurch gekennzeichnet, dass** die Vorsteuerung (61) dazu ausgebildet ist, einen tatsächlich abgegebenen Wirkstrom zu erfassen und eine Koordinatentransformation in das synthetische Koordinatensystem durchzuführen, wobei vorzugsweise eine Adaption von Leistungsvorgaben vorgesehen ist, insbesondere mittels einer Verstärkung um einen Cosinus-Wert des Phasenwinkels.

6. Windpark nach Anspruch 4 oder 5, **dadurch gekennzeichnet, dass** die Vorsteuerung (62) dazu ausgebildet ist, einen tatsächlich abgegebenen Blindstrom zu erfassen und eine Koordinatentransformation in das synthetische Koordinatensystem durchzuführen, wobei vorzugsweise eine Adaption von Leistungsvorgaben vorgesehen ist, insbesondere mittels einer Verstärkung um einen Sinus-Wert des Phasenwinkels.

7. Windpark nach einem der vorangehenden Ansprüche, **dadurch gekennzeichnet, dass** die teilnehmenden Windenergieanlagen (1) unterschiedliche Referenzphasenwinkel aufweisen, vorzugsweise durch Berücksichtigung eines lokalen Offsets für den Referenzphasenwinkel.

8. Windpark nach Anspruch 7, **dadurch gekennzeichnet, dass** der lokale Offset abhängig ist vom Betriebspunkt der jeweiligen Windenergieanlage (1).

9. Windpark nach einem der vorangehenden Ansprüche, **dadurch gekennzeichnet, dass** die teilnehmenden Windenergieanlagen (1) in Gruppen (I, II) unterteilt sind, wobei die Gruppen (I, II) unterschiedliche Referenzphasenwinkel aufweisen.

10. Windpark nach einem der vorangehenden Ansprüche, **dadurch gekennzeichnet, dass** mindestens eine der Windenergieanlagen (1) des Windparks mit einem tatsächlichen Phasenwinkel als Referenzphasenwinkel betrieben ist, wobei vorzugsweise an diese Windenergieanlage der tatsächliche Phasenwinkel an der Sammelstation (8) angelegt ist.

11. Windpark nach einem der vorangehenden Ansprüche, **dadurch gekennzeichnet, dass** die Wirk-/Blindleistungssteuerung ferner mit einem Überblendmodul (7) versehen ist, das einen Eingang für einen lokalen tatsächlichen Phasenwinkel und einen Eingang für den Referenzphasenwinkel aufweist und dazu ausgebildet ist, von dem einen auf den anderen Eingang allmählich überzublenden.

12. Windpark nach Anspruch 11, **dadurch gekennzeichnet, dass** ferner ein Startmodul (76) vorgesehen ist, das mit dem Überblendmodul (7) derart zusammenwirkt, dass ein Anfahren der Windenergieanlage (1) mit dem lokalen Phasenwinkel erfolgt und im Betrieb dann übergeblendet wird auf den Referenzphasenwinkel.

13. Windpark nach einem der vorangehenden Ansprüche, **dadurch gekennzeichnet, dass** an den Steuerungen (2) der teilnehmenden Windenergieanlagen unterschiedliche Vorgabewerte für die Blindleistung/Blindstrom angelegt sind, vorzugsweise angepasst an die lokale Spannung, wobei weiter vorzugsweise die Anpassung bei benachbarten Windenergieanlagen gegenläufig ist zur Erzeugung lokal zirkulierenden Blindstroms.

14. Windpark nach einem der vorangehenden Ansprüche, **dadurch gekennzeichnet, dass** die Sammelstation (8) blindleistungsintolerant ist, insbesondere einen passiven Diodengleichrichter aufweist.

15. Verfahren zum Betreiben eines Windparks umfassend eine Mehrzahl von Windenergieanlagen, die jeweils einen über einen Rotor angetriebenen Generator mit Umrichter zur Erzeugung elektrischer Energie aufweisen, und mit einem parkinternen Netz verbunden sind, welches die Windenergieanlagen mit einer Sammelstation verbindet, wobei an die Sammelstation eine zentrale Übertragungsleitung zur Verbindung mit einem Energieübertragungsnetz angeschlossen ist, wobei ein Phasenwinkel ein Maß ist für eine Phasenverschiebung zwischen Strom und Spannung im parkinternen Netz, und wobei die Windenergieanlagen jeweils eine Steuerung für Wirk-/Blindleistung aufweisen, die abhängig vom Phasenwinkel auf den jeweiligen Umrichter einwirken,
**gekennzeichnet durch**
Erzeugen eines eigenen Koordinatensystems im Windpark mittels eines autarken Referenzwinkelgenerators, darauf basierend Definieren eines Referenzwinkels für eine Wirk- und Blindachse im Parknetz, phasenmäßiges Fremdsteuern der Umrichter zumindest eines teilnehmenden Teils der Windenergieanlagen, indem der vom Referenzwinkelgenerator erzeugte Referenzwinkel über eine Signalleitung an die Wirk-/Blindleistungssteuerung der jeweiligen Windenergieanlage angelegt wird.

16. Verfahren nach Anspruch 15, **gekennzeichnet durch** Verwenden eines Windparks nach einem der Ansprüche 1 bis 14.

**Fig. 1**

EP 3 496 227 A1

Fig. 2

# Fig. 3

# Fig. 4

# Fig. 5

# Fig. 6

## Fig. 7

## Fig. 8

Europäisches Patentamt
European Patent Office
Office européen des brevets

**EUROPÄISCHER RECHERCHENBERICHT**

Nummer der Anmeldung

EP 18 21 0362

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2013/160486 A2 (REPOWER SYSTEMS SE [DE]) 31. Oktober 2013 (2013-10-31)<br><br>* Abbildungen 1, 2, 4 *<br>* Seite 4, Zeile 15 - Zeile 26 *<br>* Seite 11, Zeile 14 - Zeile 31 *<br>* Seite 12, Zeile 24 - Zeile 31 *<br>* Seite 17, Zeile 4 - Zeile 22 *<br>----- | 1-8, 11-13, 15,16 | INV.<br>H02J3/38<br>H02J3/50<br>H02J3/36<br>F03D7/04 |
| X | DE 10 2013 226987 A1 (SIEMENS AG [DE]) 25. Juni 2015 (2015-06-25)<br>* Absätze [0006] - [0022]; Abbildung 3 *<br>----- | 1,2,9, 10,14-16 | |

RECHERCHIERTE SACHGEBIETE (IPC)

H02J
F03D

Der vorliegende Recherchenbericht wurde für alle Patentansprüche erstellt

| Recherchenort | Abschlußdatum der Recherche | Prüfer |
|---|---|---|
| München | 15. Januar 2019 | Sulic, Tomislav |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 18 21 0362

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-01-2019

| Im Recherchenbericht angeführtes Patentdokument | Datum der Veröffentlichung | Mitglied(er) der Patentfamilie | Datum der Veröffentlichung |
|---|---|---|---|
| WO 2013160486 A2 | 31-10-2013 | CA 2871370 A1<br>EP 2841766 A2<br>US 2015088326 A1<br>WO 2013160486 A2 | 31-10-2013<br>04-03-2015<br>26-03-2015<br>31-10-2013 |
| DE 102013226987 A1 | 25-06-2015 | CN 105830328 A<br>DE 102013226987 A1<br>EP 3061179 A1<br>JP 6370386 B2<br>JP 2017501672 A<br>KR 20160087888 A<br>US 2017005479 A1<br>WO 2015090936 A1 | 03-08-2016<br>25-06-2015<br>31-08-2016<br>08-08-2018<br>12-01-2017<br>22-07-2016<br>05-01-2017<br>25-06-2015 |

EPO FORM P0461

Für nähere Einzelheiten zu diesem Anhang : siehe Amtsblatt des Europäischen Patentamts, Nr.12/82